(19) Europäisches Patentamt / European Patent Office / Office européen des brevets

(11) EP 3 790 914 B1

(12) **FASCICULE DE BREVET EUROPEEN**

(45) Date de publication et mention de la délivrance du brevet:
**12.10.2022 Bulletin 2022/41**

(21) Numéro de dépôt: **19730193.0**

(22) Date de dépôt: **07.05.2019**

(51) Classification Internationale des Brevets (IPC):
***C08F 271/00*** *(2006.01)* ***D21H 17/37*** *(2006.01)*
***D21H 17/45*** *(2006.01)*

(52) Classification Coopérative des Brevets (CPC):
(C-Sets disponibles)
**C08F 271/00; D21H 17/37; D21H 17/455;**
**D21H 21/18** (Cont.)

(86) Numéro de dépôt international:
**PCT/FR2019/051039**

(87) Numéro de publication internationale:
**WO 2019/215413 (14.11.2019 Gazette 2019/46)**

(54) **COMPLEXE DE POLYMÈRES, PRÉPARATION ET UTILISATION**

KOMPLEX AUS POLYMEREN, HERSTELLUNG UND VERWENDUNG

COMPLEX OF POLYMERS, PREPARATION AND USE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.05.2018 FR 1853919**

(43) Date de publication de la demande:
**17.03.2021 Bulletin 2021/11**

(73) Titulaire: **SPCM SA**
**42160 Andrézieux-Bouthéon (FR)**

(72) Inventeurs:
- **FAUCHER, Gatien**
**42160 Andrézieux Bouthéon (FR)**
- **FOUGEROUSE, Damien**
**42160 Andrézieux Bouthéon (FR)**
- **HUND, René**
**42160 Andrézieux Bouthéon (FR)**

(74) Mandataire: **Cabinet Laurent & Charras**
**Le Contemporain**
**50 Chemin de la Bruyère**
**69574 Dardilly Cedex (FR)**

(56) Documents cités:
**US-A- 5 753 759 US-B2- 9 546 246**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 790 914 B1



**(Cont. page suivante)**

(52) Classification Coopérative des Brevets (CPC):
(Cont.)

C-Sets
**C08F 271/00, C08F 220/56, C08F 220/06**

## Description

### DOMAINE DE L'INVENTION

La présente invention concerne un complexe de polymères issu de la polymérisation d'un ou plusieurs monomères hydrosolubles en présence d'un polymère préalablement préparé.
Un autre aspect de l'invention concerne l'utilisation de ce complexe en tant qu'agent de résistance à sec pour sa mise en œuvre dans la fabrication du papier, du carton ou analogue.

### ETAT ANTERIEUR DE LA TECHNIQUE

On recherche des papiers et cartons qui sont de plus en plus résistants, notamment pour l'industrie de l'emballage.
La résistance à sec du papier est par définition la résistance de la feuille normalement sèche. Les valeurs de résistance mécanique donnent traditionnellement une mesure de la résistance à sec du papier. On peut parler notamment de résistance à l'éclatement, à la traction, à la compression, à la délamination...
Il est bien connu d'utiliser des polymères cationiques solubles dans l'eau pour améliorer les caractéristiques de résistance du papier. De par leur nature, ils peuvent se fixer directement sur la cellulose anionique et augmenter le nombre de liaisons hydrogènes inter-fibres pour améliorer la résistance mécanique à l'état sec du papier.
Par ailleurs ils peuvent également lui conférer une charge cationique de telle sorte qu'en association avec des polymères anioniques, il y ait fixation de ces derniers sur les fibres cellulosiques, améliorant ainsi la résistance à sec de la feuille.
D'autres polymères peuvent également être introduits dans la suspension cellulosique afin d'améliorer les propriétés de la feuille de papier. Cependant, l'introduction de polymères de poids moléculaires différents peut s'avérer problématique.
En effet, il est connu de l'homme de l'art les difficultés liées à la préparation d'une composition homogène contenant deux polymères ayant des poids moléculaires distincts.
En raison de cette différence de poids moléculaire, un déphasage peut apparaître lors de la mise en solution de ces polymères.
L'homme de l'art a donc mis au point des méthodes de polymérisation permettant ainsi de pallier au problème de déphasage.
Par exemple, les brevets US 7,001,953 et US 8,021,516 décrivent des polymères hydrosolubles pouvant être utilisés dans le traitement des boues ou dans la fabrication du papier. Ces polymères sont obtenus par polymérisation de monomères en présence d'un polymère qui a été préparé préalablement et de manière indépendante. Comme indiqué dans ces documents, le polymère déjà synthétisé et le polymère en cours de synthèse, ne se greffent substantiellement pas.
Il s'agit en fait de la formation d'un polymère intercalé en présence d'un polymère hôte. Le polymère hôte n'est pas greffé lors de la polymérisation des monomères qui peut être mise en œuvre en présence d'agent ramifiant. Ce procédé permet donc d'obtenir un mélange de deux polymères distincts et intercalés. Cette structure de polymères intercalés permet d'obtenir des propriétés distinctes de celles résultant d'un mélange de polymères non intercalés.
Le brevet US 9,546,246 de la Demanderesse permet de palier le problème de déphasage. Ce brevet décrit un complexe et son utilisation en tant qu'agent de traitement de charges minérales et notamment pour sa mise en œuvre dans la fabrication du papier, du carton ou analogue.
En revanche, les produits décrits dans ce dernier brevet présentent l'inconvénient d'être de haute viscosité (environ 10000 cps), et sont donc difficiles à incorporer dans des solutions ou dispersions de faibles viscosités. Par ailleurs, cette forte viscosité a tendance à augmenter dans le temps, le produit présente donc une durée de vie faible de quelques mois uniquement. Le brevet US5,753,759 divulgue des polymères greffés obtenus par polymérisation de monomères hydrosolubles sur une polyvinylamine qui peuvent être utilisés comme agents l'amélioration de la résistance à sec des papiers.
L'un des problèmes que se propose de résoudre la Demanderesse est de mettre au point un nouveau complexe de polymères qui ne présentent pas de déphasage, c'est-à-dire un mélange homogène de polymères interconnectés. De plus, ce nouveau complexe présente l'avantage d'être stable en termes de viscosité dans le temps.
Un autre aspect de l'invention concerne un nouvel agent de résistance à sec mise en œuvre dans la fabrication du papier, du carton ou analogues.

### EXPOSE DE L'INVENTION

La présente invention concerne un complexe de polymères comprenant un polymère hydrosoluble (polymère

hôte) et un ou plusieurs monomères hydrosolubles polymérisés en présence dudit polymère hôte hydrosoluble.

Par définition, un composé ((co)polymère, monomère...) hydrosoluble est un composé qui donne une solution aqueuse lorsqu'il est dissous sous agitation à 25°C et avec une concentration de 50 $g.L^{-1}$ dans l'eau.

Plus précisément, l'objet de la présente invention concerne un complexe de polymères obtenu par polymérisation de monomères hydrosolubles en présence d'au moins un polymère hôte hydrosoluble comprenant des fonctions vinylamine et d'au moins un agent de transfert non polymérique et en l'absence d'agent ramifiant ou réticulant de type polyfonctionnel éthylénique.

Le complexe de polymères est obtenu à partir d'un rapport massique monomère anionique / eau supérieur à 0,035. Ce rapport est déterminé selon la formule suivante :

$$\frac{masse\ de\ monomère\ anionique}{masse\ totale\ d'eau}$$

Il s'agit de la quantité du ou des monomère(s) anionique(s) introduit(s) pour former le complexe de polymères en présence du polymère hôte. Il ne s'agit pas de monomères zwitterioniques ni des éventuels monomères anioniques ou zwitterioniques du polymère hôte.

La quantité totale d'eau correspond à la quantité d'eau présente initialement lors de la formation du complexe de polymères par polymérisation de monomère(s) en présence du polymère hôte, et ce, quel que soit le type de polymérisation mis en œuvre (émulsion, gel, solution...) et quelle que soit l'origine de l'eau (monomères en solution, polymère hôte en solution...).

Le rapport massique monomère anionique / eau est avantageusement supérieur à 0,035 et inférieur ou égal à 0,35, plus avantageusement supérieur à 0,035 et inférieur ou égal à 0,25, et encore plus avantageusement supérieur à 0,035 et inférieur ou égal à 0,15.

La quantité d'eau totale disponible correspond à l'eau provenant du polymère hôte, des différents monomères et des différents additifs.

Dans le complexe ainsi obtenu, le(s) polymère(s) résultant de la polymérisation des monomères se ramifie avec le polymère hôte. Il ne s'agit pas d'un mélange de polymères mais d'un complexe dans lequel le polymère hôte joue le rôle de réticulant ou ramifiant, lors de la polymérisation des monomères.

L'agent de transfert permet notamment de limiter la réticulation liée au polymère hôte et de contrôler la longueur des chaînes polymériques formées pendant la polymérisation des monomères hydrosolubles.

Par polymère, on entend un homopolymère ou un copolymère issu de la polymérisation de monomères respectivement identiques ou distincts.

Un autre aspect de l'invention est l'utilisation de ce complexe de polymères en tant qu'agent de résistance à sec dans le domaine de la fabrication de papiers, de cartons ou d'analogues.

Polymère hôte

Le polymère hôte comprend préférentiellement des fonctions vinylamine, c'est-à-dire que le polymère est de type polyvinylamine : $-(CH_2-CH(NH_2))-$.

Le polymère hôte comprenant des fonctions vinylamine peut être issu de différents procédés connus de l'homme de l'art. Il peut notamment s'agir :

- d'un polymère issu de la dégradation d'Hofmann sur un « polymère base », ou
- d'un polymère issu de l'hydrolyse totale ou partielle d'un homopolymère ou d'un copolymère de N vinylformamide.

*Les volyvinylamines issus de la dégradation d'Hofmann*

La dégradation d'Hofmann est une réaction découverte par Hofmann à la fin du dix-neuvième siècle, qui permet de convertir un amide (voire un acrylonitrile) en amine primaire par élimination de dioxyde de carbone. Le mécanisme réactionnel est détaillé ci-dessous.

En présence d'une base (soude), un proton est arraché à l'amide.

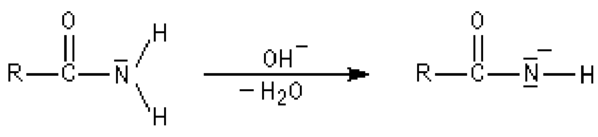

Dans le cas de l'hypochlorite, l'ion amidate formé réagit alors avec le chlore actif ($Cl_2$) de l'hypochlorite (e.g. : NaClO qui est en équilibre : 2 NaOH + $Cl_2 \Leftrightarrow$ NaClO + NaCl + $H_2O$) pour donner un N-chloramide. La base de Brønsted (par exemple NaOH) arrache un proton du chloramide pour former un anion. L'anion perd un ion chlorure pour former un nitrène qui subit une transposition en isocyanate.

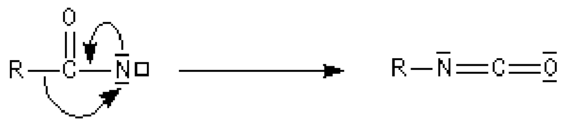

Par réaction entre l'ion hydroxyde et l'isocyanate, un carbamate est formé.

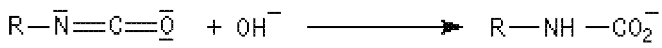

Après décarboxylation (élimination de $CO_2$) à partir du carbamate, on obtient une amine primaire :

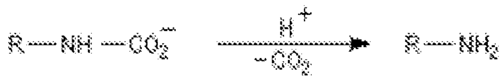

Pour la conversion de tout ou partie des fonctions amide d'un polymère en fonctions amine, deux facteurs principaux interviennent (exprimés en rapports molaires). Il s'agit de :

- Alpha = (hypohalogénure d'alcalin et/ou alcalino terreux / amide),
- Beta = (hydroxyde d'alcalin et/ou alcalino terreux / hypohalogénure d'alcalin et/ou alcalino terreux).

L'hypohalogénure (également appelé hypohalogénite) est avantageusement NaClO.

Selon un mode préférentiel, le polymère comprenant des fonctions vinylamine est issu de la dégradation d'Hofmann effectuée sur un « polymère base » comprenant un monomère non ionique choisi dans le groupe comprenant l'acrylamide ou un de ses dérivés.

Parmi les dérivés d'acrylamide, on peut citer le N-isopropylacrylamide, le N,N-diméthylacrylamide, le méthylacrylamide et la N-vinylpyrrolidone. Le monomère préféré est l'acrylamide.

Selon l'invention, la proportion en monomère acrylamide ou dérivés dans le «polymère base » est comprise entre 30 %mol et 100 %mol, de préférence entre 50 %mol et 95 %mol, et encore plus préférentiellement entre 60 %mol et 90 %mol, par rapport au nombre total de monomères dans le « polymère base ».

Le « polymère base » peut également contenir en outre des monomères cationiques et/ou anioniques.

Le ou les monomères cationiques pouvant être utilisés dans le cadre de l'invention peuvent être choisis, notamment parmi les sels d'ammonium quaternaire des monomères du type acrylamide, acrylique, vinylique, allylique ou maléique. On peut citer, en particulier et de façon non limitative, l'acrylate de diméthylaminoéthyle (ADAME) quaternisé, le méthacrylate de diméthylaminoéthyle (MADAME) quaternisé, le chlorure de diméthyldiallylammonium (DADMAC), le chlorure d'acrylamido propyltriméthyl ammonium (APTAC), et le chlorure de méthacrylamido propyltriméthyl ammonium (MAPTAC). Un monomère cationique préféré est le DADMAC.

La quaternisation des monomères, comme l'ADAME ou MADAME, peut notamment être réalisée au moyen d'un halogénure d'alkyle, par exemple un halogénure de méthyle, avantageusement le chlorure de méthyle.

Selon l'invention, la proportion en monomère cationique dans le « polymère base » est comprise entre 0 %mol et 70 %mol, de préférence entre 5 %mol et 50 %mol, et encore plus préférentiellement entre 10 %mol et 40 %mol, par rapport au nombre total de monomères dans le « polymère base ».

Le ou les monomères anioniques pouvant être utilisés dans le cadre de l'invention peuvent être choisis dans un large groupe. Ces monomères peuvent présenter des fonctionnalités acryliques, vinyliques, maléiques, fumariques, allyliques et contenir un groupe carboxylate, phosphonate, phosphate, sulfate, sulfonate, ou un autre groupe à charge anionique. Le monomère peut être acide ou bien sous forme de sel ou de métal alcalino terreux, de métal alcalin ou d'ammonium correspondant d'un tel monomère. Des exemples de monomères convenables comprennent l'acide acrylique, l'acide méthacrylique, l'acide itaconique, l'acide crotonique, l'acide maléique, l'acide fumarique et les monomères de type acide fort présentant par exemple une fonction de type acide sulfonique ou acide phosphonique tels que l'acide 2-acrylamido 2-methylpropane sulfonique, l'acide vinylsulfonique, l'acide vinylphosphonique, l'acide allylsulfonique, l'acide allylphosphonique, l'acide styrène sulfonique, et les sels de ces monomères solubles dans l'eau d'un métal alcalin, d'un métal alcalino terreux, et d'ammonium. Un monomère préféré est l'acide acrylique.

Selon l'invention, la proportion en monomère anionique dans le « polymère base » est comprise entre 0 %mol et 70 %mol, de préférence entre 2 %mol et 50 %mol, et encore plus préférentiellement entre 5 %mol et 30 %mol, par rapport au nombre total de monomères dans le « polymère base ».

Selon l'invention, le facteur alpha du polymère hôte est avantageusement compris entre 0,1 et 1, de préférence entre 0,3 et 0,9, et encore plus préférentiellement entre 0,5 et 0,8.

Selon un autre mode de l'invention, il est possible d'utiliser des polyvinylamines obtenues par dégradation d'Hofmann effectuée sur un polymère comprenant de l'acrylamide ou ses dérivés, et au moins un composé polyfonctionnel contenant au moins 3 hétéroatomes parmi N, O, S, P présentant chacun au moins un hydrogène mobile.

L'incorporation du composé polyfonctionnel est effectuée avant ou pendant la polymérisation des monomères constitutifs du « polymère base ».

De manière préférentielle, le composé polyfonctionnel est choisi dans le groupe comprenant la polyéthylèneimine, la polyamine, et la polyallylamine.

*Les volyvinylamines issus de l'hydrolyse totale ou partielle d'un polymère de N-vinylformamide*

Dans une première étape, un polymère de N-vinylformamide (NVF) est obtenu, la NVF présentant le motif suivant :

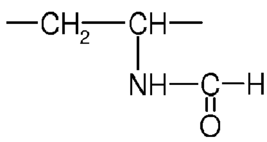

Par la suite, ce motif NVF est converti, par hydrolyse, en vinylamine :

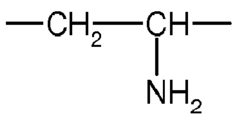

L'hydrolyse peut être menée par action d'acide (hydrolyse acide) ou de base (hydrolyse basique).

En fonction de la quantité d'acide ou de base ajoutée, le polymère de NVF est partiellement ou totalement converti en vinylamine.

De manière avantageuse, le degré d'hydrolyse est compris entre 1 et 100%, plus avantageusement encore entre 30 et 90%. En d'autres termes, 30 à 90 groupements NVF sont convertis en groupements amine pour 100 groupements NVF de départ.

Préférentiellement, le polymère de N-vinylformamide (NVF) comprend au moins un monomère non ionique et/ou au moins un monomère cationique et/ou au moins un monomère anionique. Les monomères pouvant être utilisés dans le cadre de l'invention peuvent être choisis parmi les listes ci-dessus mentionnées.

Outre le monomère vinylamine, selon un mode de réalisation préférentiel, le polymère hôte comprend au moins un monomère non ionique et au moins un monomère cationique. Préférentiellement, le polymère comprend de l'acrylamide et du DADMAC.

Selon une caractéristique préférée de l'invention, le polymère hôte peut être ramifié.

La ramification est réalisée de préférence durant (ou éventuellement après) la polymérisation des monomères constituant le polymère hôte, en présence d'un agent ramifiant polyfonctionnel et éventuellement d'un agent de transfert.

On trouvera ci-dessous une liste non limitative d'agents ramifiant : le méthylène bisacrylamide (MBA), l'éthylène glycol di-acrylate, le polyéthylène glycol diméthacrylate, le diacrylamide, le cyanométhylacrylate, le vinyloxyéthylacrylate, le vinyloxyméthacrylate, la triallylamine, le formaldéhyde, le glyoxal, les composés de type glycidyléther comme l'éthylèneglycol di glycidyléther, ou des époxy. Avantageusement, l'agent de ramification est le méthylène bis acrylamide (MBA).

En pratique, l'agent de ramification est introduit avantageusement à raison de cinq à cinquante milles (5 à 50000) parties par million en poids par rapport à la matière active (poids des monomères constituant le polymère hôte), de préférence 5 à 10000 ppm, avantageusement de 5 à 5000 ppm.

Des agents de transfert permettant de limiter la longueur des chaînes polymériques peuvent également être présents lors de la polymérisation des monomères constituant le polymère hôte. On trouvera ci-dessous une liste non

limitative des agents de transfert: alcool isopropylique, hypophosphite de sodium, mercaptoéthanol.

Selon l'invention le polymère hôte a un poids moléculaire d'au moins 10000 g/mol, de préférence d'au moins 50000 g/mol, et encore plus préférentiellement d'au moins 100000 g/mol. Il s'agit du poids moléculaire moyen en poids.

Le complexe de polymères

Il est issu de la polymérisation de monomères hydrosolubles au cours de laquelle le polymère hôte préexistant joue le rôle d'agent réticulant ou ramifiant.

Outre au moins un monomère anionique, le ou les monomères hydrosolubles mis en œuvre lors de la préparation du complexe de polymères peuvent notamment être un monomère non ionique et/ou au moins un monomère cationique.

La quantité de monomère(s) non ionique(s) est avantageusement comprise entre 1 et 99 %mol, de préférence entre 10 %mol et 80 %mol, et encore plus préférentiellement entre 20%mol et 60%mol, par rapport au nombre de monomères hydrosolubles.

La quantité de monomère(s) anionique(s) est avantageusement comprise entre 1 et 99 %mol, de préférence entre 10 %mol et 80 %mol, et encore plus préférentiellement entre 20%mol et 60%mol, par rapport au nombre de monomères hydrosolubles.

La quantité de monomère(s) cationique(s) est avantageusement comprise entre 0 %mol et 99 %mol de monomère cationique, de préférence entre 0 %mol et 60 %mol, et encore plus préférentiellement entre 0 %mol et 20%mol, par rapport au nombre de monomères hydrosolubles.

Comme déjà indiqué, cette polymérisation est mise en œuvre en présence d'au moins un agent de transfert non polymérique. De manière avantageuse, le poids moléculaire de l'agent de transfert non polymérique est inférieur à 200 g/mol. En outre, la polymérisation des monomères est également réalisée en l'absence d'agent ramifiant ou réticulant de type polyfonctionnel éthylénique.

Par « agent ramifiant ou réticulant de type polyfonctionnel éthylénique », on désigne les agents comportant un groupement polyvinylique ou polyallylique bifonctionnalisé, trifonctionnalisé ou tetrafonctionnalisé.

Au moins un agent de transfert non polymérique mis en œuvre lors de la polymérisation du ou des monomères hydrosolubles est avantageusement choisi dans le groupe comprenant l'alcool isopropylique, l'hypophosphite de sodium, et le mercaptoéthanol.

Selon la nature de l'agent de transfert, la quantité introduite de ce dernier est avantageusement comprise entre 1 et 150000 ppm, préférentiellement entre 10 et 10000 ppm, plus préférentiellement entre 100 et 5000 ppm en poids par rapport au poids des monomères hydrosolubles mis en œuvre.

Les différents monomères mis en œuvre peuvent être choisis parmi les listes respectives citées précédemment dans la description du polymère hôte (dégradation d'Hofmann et hydrolyse).

Selon l'invention, la proportion en monomères hydrosolubles mis en œuvre est avantageusement la suivante, par rapport au nombre total de monomères hydrosolubles mis en œuvre :

- 1 à 99 %mol de monomère non ionique, de préférence entre 10 %mol et 80 %mol, et encore plus préférentiellement entre 20%mol et 60%mol ; et/ou
- 1 à 99 %mol de monomère anionique, de préférence entre 10 %mol et 80 %mol, et encore plus préférentiellement entre 20%mol et 60%mol ; et/ou
- 0 %mol à 99 %mol de monomère cationique, de préférence entre 0 %mol et 60 %mol, et encore plus préférentiellement entre 0 %mol et 20%mol ;

le nombre total de monomères hydrosolubles représentant 100%.

Selon un mode préférentiel, au moins un monomère non ionique et au moins un monomère anionique sont mis en œuvre. Il s'agit préférentiellement de l'acrylamide et de l'acide acrylique.

Les complexes de la présente invention se différencient notamment de l'art antérieur du fait de la présence d'au moins un agent de transfert non polymérique lors de la polymérisation des monomères hydrosolubles en présence du polymère hôte. En effet, la présence de l'agent de transfert permet de limiter la réticulation du polymère résultant de la polymérisation des monomères hydrosolubles avec le polymère hôte tout en contrôlant le poids moléculaire des chaînes polymériques formées.

Le rapport massique entre le polymère hôte et les monomères est avantageusement compris entre 0,01 et 4, plus avantageusement entre 0,01 et 3,75, encore plus avantageusement entre 0,5 et 3,75, de préférence entre 0,75 et 3,5 et encore plus préférentiellement entre 1 et 3. Ce rapport massique peut également être compris entre 0,5 et 4. Il s'agit du rapport massique entre le polymère hôte et tous les monomères étant polymérisés en présence de ce polymère hôte.

Selon l'invention le complexe mis en solution à 8% en poids de polymère sec a une transmittance préférentiellement inférieure à 70%, plus préférentiellement inférieure à 55%, et encore plus préférentiellement inférieure à 40%.

La transmittance est mesurée à une concentration dans l'eau de 8% en poids sec du complexe de polymères.

Les valeurs de transmittance sont mesurées à l'aide d'un appareil de type UV-photometer DR 3900 (HACH) sur une solution aqueuse de 8 % en poids de polymère sec. La transmittance correspond au pourcentage de la lumière transmise à travers un échantillon de 1 cm d'épaisseur dans une cuve en quartz, à une longueur d'onde de 750 nm. Les valeurs de transmittance sont avantageusement mesurées à 25°C.

De manière générale, la préparation du complexe de polymères de l'invention ne nécessite pas de développement de procédé de polymérisation particulier. En effet, ce complexe peut être obtenu selon toutes les techniques de polymérisation bien connues par l'homme de métier. Il peut notamment s'agir de polymérisation en solution ; polymérisation en gel ; polymérisation par précipitation ; polymérisation en émulsion (aqueuse ou inverse) ; polymérisation en suspension ; ou de polymérisation micellaire.

Le procédé de préparation du complexe de polymères peut comprendre les étapes suivantes :

- préparation d'un mélange comprenant au moins un polymère hôte, au moins un type de monomères hydrosolubles, et au moins un agent de transfert non polymérique ;
- obtention du complexe de polymères par polymérisation des monomères hydrosolubles.

Le procédé de préparation du complexe de polymères peut comprendre les étapes suivantes :

- préparation d'un mélange comprenant au moins un polymère hôte, et au moins un agent de transfert non polymérique ;
- au moins un type de monomères hydrosolubles sont ajoutés en coulée continue dans le mélange ;
- obtention du complexe de polymères par polymérisation des monomères hydrosolubles.

Le procédé de préparation du complexe de polymères peut comprendre les étapes suivantes :

- préparation d'un mélange comprenant au moins un polymère hôte ;
- au moins un type de monomères hydrosolubles, et au moins un agent de transfert non polymérique sont ajoutés en coulée continue dans le mélange ;
- obtention du complexe de polymères par polymérisation des monomères hydrosolubles.

Le procédé de préparation du complexe de polymères peut comprendre les étapes suivantes :

- au moins un polymère hôte, au moins un type de monomères hydrosolubles, et au moins un agent de transfert non polymérique sont ajoutés en coulée continue dans le réacteur ;
- obtention du complexe de polymères par polymérisation des monomères hydrosolubles.

Le complexe de polymères peut se trouver sous forme poudre, liquide ou émulsion. Préférentiellement, le complexe est sous forme liquide.

Préférentiellement, lors de la préparation du complexe, le polymère hôte est introduit dans le réacteur avec les monomères et l'agent de transfert de chaîne non polymérique. La polymérisation est ensuite avantageusement initiée par ajout des catalyseurs.

Un autre aspect de l'invention est l'utilisation des complexes de polymères en tant qu'agent de résistance à sec dans le domaine de la fabrication de papiers, de cartons ou d'analogues.

Il a été trouvé de manière surprenante que l'utilisation des complexes de l'invention, en tant qu'agent de résistance à sec, permettait d'améliorer grandement les propriétés mécaniques de la feuille à l'état sec dans le cadre de la fabrication de papiers, de cartons ou analogues.

Sans vouloir émettre une quelconque théorie, il semblerait que le greffage du polymère résultant de la polymérisation des monomères hydrosolubles sur le polymère hôte permet d'obtenir des produits ayant de meilleures performances comme agent de résistance à sec.

Le complexe peut être utilisé sous forme de solution aqueuse diluée ou non diluée.

La quantité de complexe ajouté est avantageusement comprise entre 3 g de matière active/tonne de papier (poids sec en fibres, avantageusement cellulosiques) et 10000 g/T, préférentiellement entre 10 g/T et 7000g/T et encore plus préférentiellement entre 30 g/T et 3000 g/T.

En plus du complexe, d'autres composés connus de l'homme de métier peuvent être associés. On pourra citer de manière non limitative les dispersants, les biocides ou encore les agents antimousses.

Un autre aspect de l'invention concerne un procédé de fabrication de papier, carton ou analogues, selon lequel, avant formation de ladite feuille, on ajoute à la suspension fibreuse (avantageusement des fibres cellulosiques), en un ou plusieurs points d'injection au moins un complexe selon l'invention.

Ce procédé peut également comprendre l'addition de polymères distincts du complexe selon l'invention. On pourra citer à titre d'exemple les coagulants, les agents de rétention, les flocculants ou encore l'amidon.
Les diverses étapes du procédé de fabrication de papier, carton ou analogues sont conformes aux techniques faisant partie des connaissances de l'homme du métier.
Les exemples ci-après illustrent l'invention sans toutefois la limiter.

**EXEMPLES DE REALISATION DE L'INVENTION**

Synthèse d'un complexe du polymère P selon l'invention

Dans un réacteur de 1 litre équipé d'un agitateur mécanique, d'un thermomètre, d'un réfrigérant et d'une canne plongeante d'azote gazeux, on introduit 570g de polymère hôte (produit commercial HF31 (SNF SAS), matière active=10,5%) nommé dans les exemples par X1 (30 %mol DADMAC/70%mol acrylamide). On ajoute 44g d'acrylamide (solution à 50% en poids) et 25g d'acide acrylique (solution à 90% en poids), ainsi que 0,9g d'agent de transfert de chaine hypophosphite de sodium). La température est ajustée à 30°C et les catalyseurs sont alors injectés dans le milieu réactionnel, soit 0,44g de persulfate de sodium, 0,11g de métabisulfite de sodium et 0,03g de sel de Môhr. Grâce à l'exothermie de réaction, la température du milieu réactionnel augmente jusqu'à la température de 45°C. Durant la conversion des monomères, un voile blanchâtre apparait, qui devient un précipité, pour former finalement une dispersion complètement blanche. Après 45 minutes de vieillissement à 45°C, 2g de bisulfite de sodium (solution à 40% en poids) sont additionnés pour faire réagir les éventuels monomères résiduels. Un nouveau vieillissement de 45 minutes à 45°C est appliqué avant refroidissement.
La solution de complexe obtenue (produit P) présente un pH de 2,9, un extrait sec de 26,2% et une viscosité de 450 cps. Ce polymère complexe est stable, sans déphasage, pendant au moins 12 mois.

Synthèse du polymère X2

Dans un réacteur de 1 litre, équipé d'un agitateur mécanique, d'un thermomètre, d'un réfrigérant et d'une canne plongeante d'azote gazeux, on introduit 555 g d'eau deionisée, 127 g d'acrylamide (solution à 50 % en poids), 71 g d'acide acrylique (solution à 90 % en poids), 71 g d'hydroxyde de sodium 50% (solution à 50 % en poids). La température est ajustée à 35 °C. On injecte ensuite rapidement 0,9 g d'hypophosphite de sodium, 0,17 g de VAO44 (2,2'-azobis[2-(2-imidazolin-2-yl)propane]dihydrochlorure) et 0,08g de V50 (2,2'-azobis(2-methylpropionamidine)dihydrochlorure). Grâce à l'exothermie de réaction, la température du milieu réactionnel augmente jusqu'à la température de 75°C. Après 45 minutes de vieillissement à 45°C, on ajoute 2 g de bisulfite de sodium 40 % (solution à 40 % en poids) pour faire réagir les éventuels monomères résiduels. Un nouveau vieillissement de 45 minutes à 45°C est appliqué avant dilution avec 1173g d'eau pour refroidissement à 25-30°C.
On obtient par ce procédé un polymère anionique présentant un pH de 6,3, un extrait sec de 7,4% et une viscosité de 250 cps.

Procédures de tests d'évaluations

Mesure de la transmittance :

Des solutions aqueuses comprenant 8 % en poids de polymère sec sont préparées. Les valeurs de transmittance sont mesurées à une longueur d'onde de 750 nm à l'aide d'un appareil de type UV-photometer DR 3900 (HACH). La transmittance correspond au pourcentage de la lumière transmise à travers un échantillon de 1 cm d'épaisseur.

Performances de résistance à sec :

Les formettes de papier sont réalisées avec une formette dynamique automatique. Tout d'abord, la pâte à papier est préparée en désintégrant, pendant 25 minutes, 90g de fibres de carton recyclé dans 2 litres d'eau chaude. La pâte obtenue est ensuite diluée dans l'eau jusqu'à un volume de 6 litres. Une fois la consistance mesurée précisément, la quantité nécessaire de cette pâte est prélevée de manière à obtenir au final une feuille avec un grammage de 90g/m$^2$.
La pâte est alors introduite dans le cuvier de la formette dynamique, diluée jusqu'à une consistance de 0,5% et agitée modérément avec un agitateur mécanique afin d'homogénéiser la suspension aqueuse.
Un buvard et la toile de formation sont placés dans le bol de la formette dynamique avant de démarrer la rotation du bol à 1000 tr/min et de construire le mur d'eau. Les différents agents de résistance à sec sont alors introduits dans la suspension fibreuse agitée avec un temps de contact de 30 secondes pour chaque polymère. La feuille est alors réalisée par 23 aller-retours de la buse projetant la pâte dans le mur d'eau. Une fois que l'eau est drainée et que la

séquence automatique est terminée, la toile de formation avec le réseau de fibres formées est retirée du bol de la formette dynamique et placée sur une table. Un buvard sec est déposé du côté du matelas de fibres humides et est pressé une fois avec un rouleau. L'ensemble est retourné et la toile est délicatement séparée du matelas fibreux. Un second buvard sec est déposé et la feuille (entre les deux buvards) est pressée sous une presse délivrant 4 bars, puis est séchée sur un sécheur tendu pendant 9 minutes à 117°C. Les deux buvards sont ensuite retirés et la feuille est stockée pendant une nuit dans une pièce à humidité et température contrôlées (50% d'humidité relative et 23°C). Les propriétés de résistance à sec de toutes les feuilles obtenues par cette procédure sont évaluées.

L'éclatement (Burst Index) est mesuré avec un éclatomètre Messmer Buchel M 405 (Moyenne sur 12 mesures).

Dans tous les exemples qui suivent, et sauf indications contraires, les feuilles de papier sont réalisées selon la procédure ci-dessus en introduisant l'agent de résistance à sec à un dosage de 1,5kg/t (polymère sec / fibres sèches).

*Tableau 1 : Comparaison performances DSR et transmittances*

| N° Essai | Produit | Dosage (kg/t) | Amélioration de l'index d'éclatement (%) | Transmittance (%) | Rapport massique monomère anionique / eau |
|---|---|---|---|---|---|
| 0 | Blanc | 0 | Référence | NA | NA |
| 1 | X1 | 1,5 | 6,3 | 98,4 | NA |
| 2 | X2 | 1,5 | 3,7 | 99,2 | NA |
| 3 | Mélange X1/X2 (57.5/42.5 % poids sec) | 1,5 | NA | NA | 0,0163 |
| 4 | P (INVENTION) | 1,5 | 21,7 | 0,1 | 0,0458 |
| 5 | X3 | 1,5 | 5,1 | 82,4 | 0,0150 |
| 6 | X4 | 1,5 | 1,4 | 99,8 | 0 |
| 7 | N | 1,5 | 6,7 | 99,5 | 0,0169 |
| 8 | M | 1,5 | NA | NA | 0,0169 |
| 9 | Q | 1,5 | 6,5 | 99,4 | 0,0177 |

(Les dosages exprimés sont en quantité de polymère sec par rapport à la pâte sèche)
X1 : Copolymère issu de la dégradation d'Hofmann d'un copolymère DADMAC/AM (30/70 % en mole) avec un facteur alpha=0,7 (Correspond au polymère hôte du produit P).
X2 : Copolymère AA/AM (50/50 % en mole).
P : Complexe de polymères selon l'invention (570 g X1 / 44.5 g monomères).
X3 : Mélange de polymères : polyamine/X2 (15/85 % en poids sec), la polyamine étant ramifiée et de type diméthylamine / éthylènediamine / épichlorhydrine selon US 7,001,953 (WSP).
X4 : Polymère de type PVAm greffé PAM (PVAm/PAM : 30mol/70mol) selon US 5,753,759 (BASF).
N : Complexe de polymères selon Brevet US 9,546,246 B2 (SNF SAS) (%Extrait Sec : 35.2% ; Viscosité : 9600 cps).
M : Produit synthétisé comme le complexe de polymères N, mais sans utilisation d'agent de transfert.
Q : Produit synthétisé comme le complexe de polymères P, mais avec un rapport massique monomère anionique/eau = 0,0177.
VAm = vinylamine
DADMAC = chlorure de diméthyldiallylammonium
AM = acrylamide
AA = acide acrylique
NVF = N-vinylformamide

Dans les essais 1 et 2 du tableau 1, on constate que l'utilisation du polymère hôte (X1), ou du polymère secondaire (X2), seul n'offre pas d'amélioration significative en performance de résistance à sec par rapport à l'essai de référence (blanc).

Les meilleures performances de résistance à sec sont obtenues avec l'essai 4, qui correspond à l'utilisation du produit P de l'invention, et qui surclasse les produits de l'état de la technique.

Le mélange X1/X2 (essai 3) correspond, en termes de nature chimique ainsi que de ratios ioniques, au produit P de l'invention (essai 4). Le mélange X1/X2 (essai 3) se présente sous la forme d'un coacervat qui n'est pas stable au stockage et qui prend en masse à température ambiante au bout de 24 heures.

Les produits X3 et X4 (essais 5 et 6) ainsi que le produit N, respectivement issus des brevets US 7,001,953 (WSP) et US 5,753,759 (BASF) et du brevet US 9,546,246 B2 (SPCM SA), n'apportent pas des performances équivalentes en résistance à sec par rapport au produit P de l'invention.

Lors de la synthèse du produit M, on obtient un gel compact, qui le rend impossible à tester.

Le produit Q (essai 9) qui correspond à un produit synthétisé comme le complexe de polymère P, mais avec un rapport massique monomère anionique/eau de 0,0177, se présente sous la forme d'un liquide translucide de transmittance 99,4%, et développe des performances de résistance à sec faibles par rapport au produit de l'invention P (essai 4).

## Revendications

**1.** Complexe de polymères obtenu par polymérisation de monomères hydrosolubles : en présence d'un polymère hôte comprenant des fonctions vinylamine et d'un agent de transfert non polymérique, et en l'absence d'agent ramifiant ou réticulant de type polyfonctionnel éthylénique **caractérisé en ce que** le complexe de polymères est obtenu à partir d'un rapport massique monomère anionique / eau supérieur à 0,035.

**2.** Complexe de polymère selon la revendication 1, ***caractérisé*** **en ce que** le complexe a une transmittance inférieure à 70%, préférentiellement inférieure à 55%, et encore plus préférentiellement inférieure à 40%, à une concentration dans l'eau de 8% en poids sec de complexe de polymères.

**3.** Complexe de polymère selon la revendication 1 ou 2, ***caractérisé*** **en ce que** le rapport massique entre le polymère hôte et les monomères est compris entre 0,01 et 3,75, de préférence entre 0,75 et 3,5, et encore plus préférentiellement entre 1 et 3.

**4.** Complexe de polymères selon l'une des revendications 1 à 3, ***caractérisé*** **en ce que** l'agent de transfert non polymérique est choisi dans le groupe comprenant l'alcool isopropylique, l'hypophosphite de sodium, et le mercaptoethanol.

**5.** Complexe de polymères selon l'une des revendications 1 à 4, ***caractérisé*** **en ce que** le polymère hôte comprenant des fonctions vinylamine est issu de l'hydrolyse d'un homopolymère ou d'un copolymère de N vinylformamide.

**6.** Complexe de polymères selon l'une des revendications 1 à 4, ***caractérisé*** **en ce que** le polymère hôte comprenant des fonctions vinylamine est issu de la réaction de dégradation d'Hofmann sur un polymère base.

**7.** Complexe de polymères selon la revendication 6, ***caractérisé*** **en ce que** le polymère base comprend au moins un monomère non ionique choisi dans le groupe comprenant l'acrylamide et ses dérivés.

**8.** Complexe de polymères selon la revendication 6 ou 7, ***caractérisé*** **en ce que** le polymère base comprend au moins un composé polyfonctionnel contenant au moins 3 hétéroatomes parmi N, O, S, P présentant chacun au moins un hydrogène mobile.

**9.** Complexe de polymères selon l'une des revendications 6 à 8, ***caractérisé*** **en ce que** le polymère base comprend au moins un composé polyfonctionnel choisi dans le groupe comprenant la polyéthylèneimine, la polyamine, et la polyallylamine.

**10.** Complexe de polymères selon l'une des revendications 1 à 9, ***caractérisé*** **en ce que** les monomères constitutifs du polymère hôte et les monomères hydrosolubles sont choisis dans le groupe comprenant :

- l'acrylamide ; le N-isopropylacrylamide ; le N,N-diméthylacrylamide ; la N-vinylformamide ; la N-vinylpyrrolidone ;
- les sels d'ammonium quaternaires de l'acrylate de diméthylaminoéthyle (ADAME) ; les sels d'ammonium quaternaires du méthacrylate de diméthylaminoéthyle (MADAME) ; le chlorure de diméthyldiallylammonium (DADMAC) ; le chlorure d'acrylamido propyltriméthyl ammonium (APTAC) ; le chlorure de methacrylamido propyltrimethyl ammonium (MAPTAC) ;
- l'acide acrylique ; l'acide méthacrylique ; l'acide itaconique ; l'acide crotonique ; l'acide maléique ; l'acide fumarique ; l'acide 2-acrylamido 2-méthylpropane sulfonique ; l'acide vinylsulfonique ; l'acide vinylphosphonique ; l'acide allylsulfonique ; l'acide allylphosphonique ; l'acide styrène sulfonique ; les sels hydrosolubles d'un métal alcalin, d'un métal alcalino terreux, ou d'ammonium de ces monomères.

**11.** Procédé de fabrication de papier, carton ou analogues, selon lequel, avant formation de ladite feuille, on ajoute à la suspension fibreuse, en un ou plusieurs points d'injection au moins un complexe selon l'une des revendications 1 à 10.

**Patentansprüche**

**1.** Polymerkomplex, erhalten durch Polymerisation wasserlöslicher Monomere in Gegenwart eines Wirtspolymers, das Vinylaminfunktionen umfasst, und eines nichtpolymeren Transfermittels und in Abwesenheit eines Verzweigungs- oder Vernetzungsmittels vom polyfunktionellen ethylenischen Typ, **dadurch gekennzeichnet, dass** der Polymerkomplex durch ein Massenverhältnis von anionischem Monomer zu Wasser von mehr als 0,035 erhalten wird.

**2.** Polymerkomplex gemäß Anspruch 1, **dadurch gekennzeichnet, dass** der Komplex eine Transmission von weniger als 70 %, vorzugsweise weniger als 55 % und stärker bevorzugt weniger als 40 % bei einer Konzentration in Wasser von 8 Trockengewichtsprozent Polymerkomplex aufweist.

**3.** Polymerkomplex gemäß Anspruch 1 oder 2, **dadurch gekennzeichnet, dass** das Massenverhältnis zwischen dem Wirtspolymer und den Monomeren im Bereich zwischen 0,01 und 3,75, vorzugsweise zwischen 0,75 und 3,5 und stärker bevorzugt zwischen 1 und 3 liegt.

**4.** Polymerkomplex gemäß einem der Ansprüche 1 bis 3, **dadurch gekennzeichnet, dass** das nicht-polymere Transfermittel aus der Gruppe ausgewählt ist, die Isopropylalkohol, Natriumhypophosphit und Mercaptoethanol umfasst.

**5.** Polymerkomplex gemäß einem der Ansprüche 1 bis 4, **dadurch gekennzeichnet, dass** das Vinylaminfunktionen umfassende Wirtspolymer durch Hydrolyse eines N-Vinylformamid-Homopolymers oder -Copolymers entsteht.

**6.** Polymerkomplex gemäß einem der Ansprüche 1 bis 4, **dadurch gekennzeichnet, dass** das Vinylaminfunktionen umfassende Wirtspolymer durch die Hofmann-Abbaureaktion an einem Basispolymer entsteht.

**7.** Polymerkomplex gemäß Anspruch 6, **dadurch gekennzeichnet, dass** das Basispolymer mindestens ein nichtionisches Monomer umfasst, welches aus der Gruppe ausgewählt ist, die Acrylamid und dessen Derivate umfasst.

**8.** Polymerkomplex gemäß Anspruch 6 oder 7, **dadurch gekennzeichnet, dass** das Basispolymer mindestens eine polyfunktionelle Verbindung umfasst, die mindestens 3 Heteroatome aus N, O, S, P enthält, die jeweils mindestens einen beweglichen Wasserstoff aufweisen.

**9.** Polymerkomplex gemäß einem der Ansprüche 6 bis 8, **dadurch gekennzeichnet, dass** das Basispolymer mindestens eine polyfunktionelle Verbindung umfasst, welche aus der Gruppe ausgewählt ist, die Polyethylenimin, Polyamin und Polyallylamin umfasst.

**10.** Polymerkomplex gemäß einem der Ansprüche 1 bis 9, **dadurch gekennzeichnet, dass** die das Wirtspolymer bildenden Monomere und die wasserlöslichen Monomere aus der Gruppe ausgewählt sind, die Folgendes umfasst:

- Acrylamid; N-Isopropylacrylamid; N,N-Dimethylacrylamid; N-Vinylformamid; N-Vinylpyrrolidon;
- quartäre Ammoniumsalze von Dimethylaminoethylacrylat (ADAME); quartäre Ammoniumsalze von Dimethylaminoethylmethacrylat (MADAME); Dimethyldiallylammoniumchlorid (DADMAC), Acrylamidopropyltrimethylammoniumchlorid (APTAC); Methacrylamidopropyltrimethylammoniumchlorid (MAPTAC);
- Acrylsäure; Methacrylsäure; Itaconsäure; Crotonsäure; Maleinsäure; Fumarsäure; 2-Acrylamido-2-methylpropansulfonsäure; Vinylsulfonsäure; Vinylphosphonsäure; Allylsulfonsäure; Allylphosphonsäure; Styrolsulfonsäure; wasserlösliche Alkalimetall-, Erdalkalimetall- oder Ammoniumsalze dieser Monomere.

**11.** Verfahren zur Herstellung von Papier, Karton oder dergleichen, gemäß dem vor der Bildung des Blattes mindestens ein Komplex gemäß einem der Ansprüche 1 bis 10 an einem oder mehreren Einspritzpunkten zur Fasersuspension hinzugefügt wird.

## Claims

1. A polymer complex that is obtained by polymerizing water-soluble monomers: in the presence of a water-soluble host polymer that comprises vinylamine functions and of a non-polymeric transfer agent, and in the absence of a branching or crosslinking agent of the ethylenic polyfunctional type, said polymer complex being **characterized in that** it is obtained as from a mass ratio of anionic monomer to water that is greater than 0.035.

2. A polymer complex according to claim 1, **characterized in that** the complex has transmittance of less than 70%, preferably less than 55%, and even more preferably less than 40%, at a concentration in water of 8% by dry weight of polymer complex.

3. A polymer complex according to claim 1 or claim 2, **characterized in that** the mass ratio of the host polymer to the monomers lies in the range 0.01 to 3.75, preferably in the range 0.75 to 3.5, and even more preferably in the range 1 to 3.

4. A polymer complex according to any one of claims 1 to 3, **characterized in that** the non-polymeric transfer agent is chosen from the group comprising isopropyl alcohol, sodium hypophosphite, and mercaptoethanol.

5. A polymer complex according to any one of claims 1 to 4, **characterized in that** the host polymer comprising vinylamine functions results from hydrolysis of a homopolymer or of a copolymer of N vinylformamide.

6. A polymer complex according to any one of claims 1 to 4, **characterized in that** that the host polymer comprising vinylamine functions results from the Hofmann degradation reaction on a base polymer.

7. A polymer complex according to claim 6, **characterized in that** the base polymer comprises at least one non-ionic monomer chosen from the group comprising acrylamide and derivatives thereof.

8. A polymer complex according to claim 6 or claim 7, **characterized in that** the base polymer comprises at least one polyfunctional compound containing at least 3 heteroatoms from among N, O, S, P, each of which has at least one mobile hydrogen.

9. A polymer complex according to any one of claims 6 to 8, **characterized in that** the base polymer comprises at least one polyfunctional compound chosen from the group comprising polyethyleneimine, polyamine, and polyallylamine.

10. A polymer complex according to any one of claims 1 to 9, **characterized in that** the constituent monomers of the host polymer and the water-soluble monomers are chosen from the group comprising:

    - acrylamide, N-isopropylacrylamide, N,N-dimethylacrylamide, N-vinylformamide, and N-vinylpyrrolidone;
    - quaternary ammonium salts of dimethylaminoethyl acrylate (DMAEA), quaternary ammonium salts of dimethylaminoethyl methacrylate (DMAEMA), diallyldimethylammonium chloride (DADMAC), acrylamido propyltrimethyl ammonium chloride (APTAC), and methacrylamido propyltrimethyl ammonium chloride (MAPTAC); and
    - acrylic acid, methacrylic acid, itaconic acid, crotonic acid, maleic acid, fumaric acid, 2-acrylamido 2-methylpropane sulfonic acid, vinylsulfonic acid, vinylphosphonic acid, allylsulfonic acid, allylphosphonic acid, styrene sulfonic acid, and water-soluble salts of an alkali metal, of an alkaline earth metal, or of ammonium of these monomers.

11. A method of making paper, cardboard or the like, in which method, prior to forming said sheet, at least one complex according to any one of claims 1 to 10 is added to the fiber suspension at one or more injection points.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 7001953 B
- US 8021516 B
- US 9546246 B
- US 5753759 A
- US 9546246 B2